# EUROPEAN PATENT SPECIFICATION

(11) **EP 0 612 468 B1**
(45) Date of publication and mention of the grant of the patent: **18.06.1997**
(21) Application number: 94200468.0
(22) Date of filing: 24.02.1994
(51) Int. Cl.: A01K 31/00

(54) **A device for keeping poultry**
Vorrichtung zum Halten von Geflügel
Dispositif pour l'élevage de volailles

(30) Priority: 26.02.1993 NL 9300360
(43) Date of publication of application: 31.08.1994
(73) Proprietor: Jafarco B.V., 5507 RM Veldhoven (NL)
(72) Inventor: Jacobs, Petrus, NL-5507 RM Oerle (NL); de Bruin, Antonius Wilhelmus, NL-5831 BB Boxmeer (NL); Kemps, Adrianus Petrus Maria, NL-5688 JH Oirschot (NL)
(74) Representative: Vollebregt, Cornelis Jacobus, Ir.

(56) References cited:
- EP-A- 0 047 043
- EP-A- 0 088 500
- DE-A- 3 715 735
- DE-U- 8 505 174
- NL-A- 7 613 556
- NL-A- 8 902 177
- NL-A- 9 002 250
- POULTRY INTERNATIONAL vol. 31, no. 13 , November 1992 , ILLINOIS US pages 18 - 19 XP363632 'manure, environment and ammonia'

## Description

The invention relates to a device for keeping poultry, provided with a building and with cages disposed one above the other inside the building, whereby the cages are provided with belts which are movable in the longitudinal direction of the cages, whilst air ducts are located under said belts, via which pressurized air from an air conditioning plant can be supplied to the cages, and means are provided by which the air flowing from the cages can be discharged from the building, all this in such a manner that a certain overpressure can be maintained inside the building.

Such a device is known from EP-A-0047043.

In this known device the floor of the cage is made up of a fixedly disposed wire grid, on which the poultry moves around. Such wire grid floors are less suitable, in particular for rearing poultry. Endless conveyor belts are furthermore disposed under the wire grid floors in this known device, in such a manner that the spaced-apart upper and lower parts of the conveyor belts bound air ducts. From these air ducts pressurized air can flow along the outer edges of the upper parts of the conveyor belts, whereby the pressure of the pressurized air must be sufficiently high for forcing the outer edges of the upper parts of the belts away from strips supporting said outer edges. Baffle plates are thereby provided above the edges of the upper parts of the conveyor belts, in order to achieve that the air flowing from the air ducts transversely to the longitudinal direction of the upper parts of the belts is slightly deflected towards the centre of the grid floors again.

A combination of conveyor belts bounding air chambers and grid floors located some distance thereabove leads to a construction which takes up a comparatively great deal of space, whilst furthermore it is not possible to realize a uniform distribution of the air over the grid floor.

From EP-A-0088500 poultry cages are known wherein the floors of the cages are made up of perforated belts, which can be moved to and fro. Endless conveyor belts are disposed under said belts, in order to carry away manure and the like falling through the belts. Said publication does not provide any indication whatever with regard to the supplying of fresh air to the cages, which is essential to keeping the animals in optimal health condition.

From NL-A-8902177 a building for rearing poultry is furthermore known, wherein a fixedly disposed loadbearing floor is provided some distance above a concrete floor of the building. Air is supplied to the space between said concrete floor and said loadbearing floor, which air can flow through the perforated loadbearing floor to the space of the building above the loadbearing floor.

A net may furthermore be placed on the loadbearing floor, by means of which the layer of litter and poultry present thereon might be pulled out of the building.

The available space is not optimally used in this known construction, whilst the fixedly disposed loadbearing floor and the concrete floor located thereunder will be difficult to clean.

According to the invention the belts form floors suitable for taking up litter, whereby the belts are evenly perforated over at least substantially their entire effective surface forming the floors, whilst the bottoms of the air ducts located below the belts are made up of closed belts, which are movable in the longtidudinal direction of the cages.

When using the construction according to the invention a compact construction of the floors and the air ducts located under said floors may be realized, whilst an even supply of air from the air ducts to the cages can be effected over the entire floor surface of the cages. Furthermore any material present on the floors formed by the belts as well as material which has fallen through said perforated belts onto the belts forming the bottoms of the air ducts may be carried away from the cages in a simple and effective manner by moving the belts lengthwise, during which operation the belts may also be efficiently cleaned, if desired.

The even supply of fresh air over the entire perforated floor surface of the cages will effect a very quick desiccation of the poultry manure thereby, as a result of which the emission of ammonia will be minimal, whilst at the same time an even and sound atmosphere is maintained in the cages, without any disadvantageous occurrence of draught.

The invention will be explained in more detail hereafter with reference to an embodiment of the device according to the invention diagrammatically illustrated in the accompanying Figures.

Figure 1 diagrammatically shows parts of a few cages disposed one above the other.

Figure 2 is a front view of a few cages disposed one above the other.

Figure 3 is a side view of a few cages disposed one above the other.

Figure 4 is a larger-scale view of the ends of a few cages disposed one above the other.

Figure 5 is a plan view of a number of cages disposed one above the other and in side-by-side relationship in a building.

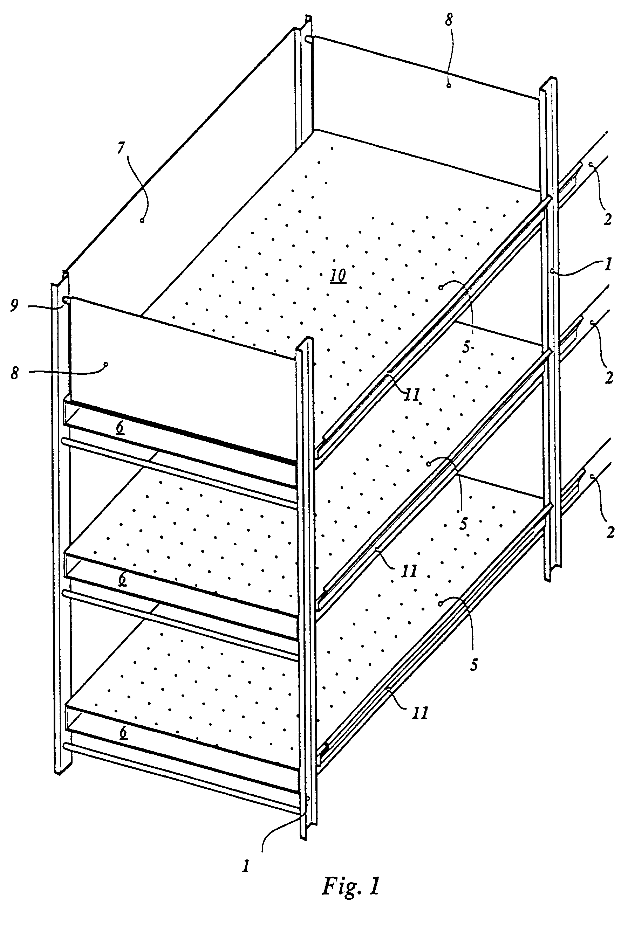

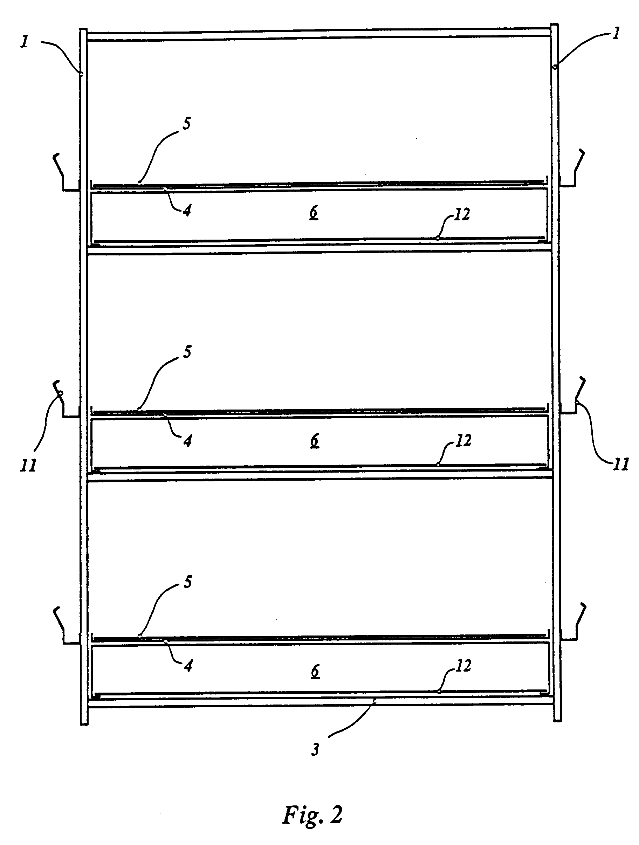

Figures 1 - 3 show a frame built up of columns 1, longitudinal girders 2 and cross girders 3, which frame supports a number of horizontal grid floors 4 disposed one above the other, which are secured to the frame. Perforated plastic belts 5, which are preferably made of polypropylene, are supported on said grid floors.

An air duct 6, which is closed at its bottom side and its sides, is provided under each of said grid floors 4, from which pressurized air supplied to the air ducts 6 in a manner yet to be described can escape through the grid floors 4 and perforated belts 5 bounding the air ducts 6 at their upper sides.

At the longitudinal sides of the frame formed by the beams 1 - 3 the spaces above the grid floors 4 are closed by side walls 7 consisting of wire netting or the like material. Furthermore cross walls 8 are provided in regularly spaced-apart relationship, seen in the longitidinal direction of the frame, between opposite side walls 7, which cross walls are pivotally suspended in the frame by pivots 9 provided near their upper ends, and which can be pivoted through 90° from the usual vertical position to an at least substantially vertical position by means not shown. Said cross walls 8 bound a number of separated cages 10 for accommodating poultry above each of said grid floors 4. The length of such a cage formed between two successive cross walls 8 may for example be ± 4 metres, whilst the width of the cage may for example be ± 1.4 metres.

Furthermore feed troughs 11 as well as water supply means (not shown) for feeding and watering the poultry may be provided on the frame.

The bottoms of the air ducts 6 are made up of non-perforated belts 12.

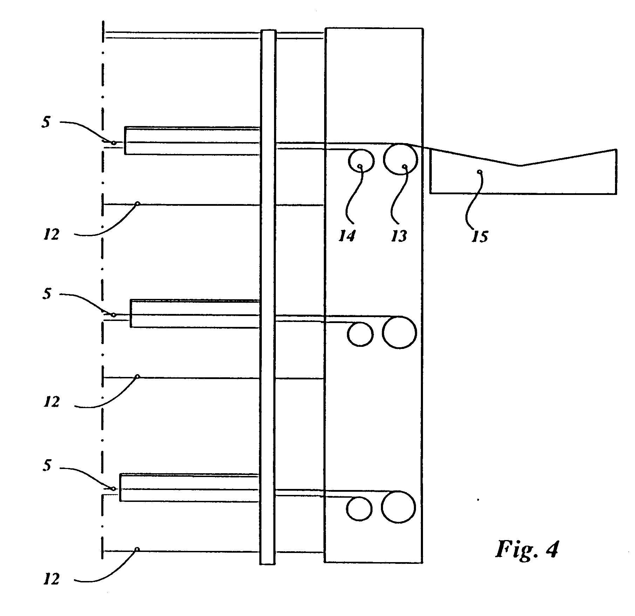

As is furthermore diagrammatically shown in Figure 4, rollers 13 and 14 respectively are disposed near one end of the frame built up of the beams 1 - 3, which rollers can be rotated by driving means (not shown), so as to wind the perforated belts 5 and the non-perforated belts 12 respectively on said rollers. Furthermore a vertically movable conveyor 15 is provided near said end of the frame.

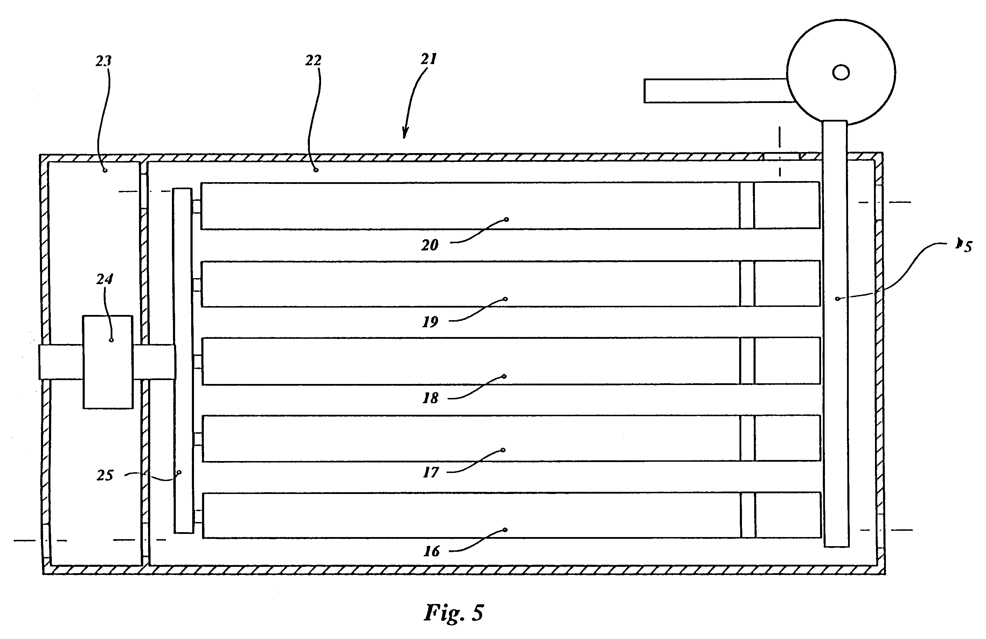

As is shown in particular in Figure 5, a number of such frames 16 - 20 bounding cages may be disposed side by side inside a building 21. The conveyor belt 15 thereby extends transversely to the longitudinal direction of the cages near one end of said cages, as will be apparent from the diagrammatic plan view of Figure 5.

As is furthermore indicated in Figure 5 an air conditioning device 24 is disposed in a part 23 of the building separated from the part 22 accommodating the cages. From said air conditioning device air can be supplied, through pipes 25, to the air ducts 6 located under the perforated floors 4, as is diagrammatically indicated in Figure 5. The part 23 can be arranged e.g. also above a ceiling of the part 22 of the building.

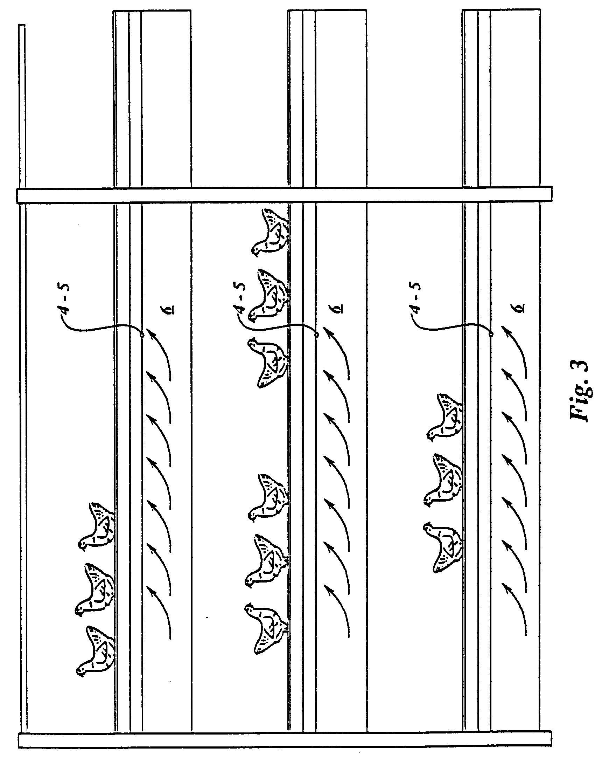

When it is intended to keep poultry it will be preferred to provide litter on the perforated belts 5. During the rearing period of the poultry pressurized air may be continuously supplied to the air ducts 6 from the air conditioning device 24. Said air will flow upwards through the perforated bottoms, as is indicated by arrows in Figure 3. The air flowing through the perforated belt 5 and the litter will effect a quick desiccation of the poultry manure, so that the emission of ammonia will be minimal.

The supply and discharge of air may be regulated in such a manner, that a certain overpressure will be maintained in the interior of the building 21.

The air flowing from the cages into the building may be drawn in again by the air conditioning device 24, and possibly be passed through a heat exchanger, in order to heat fresh air to be supplied to the poultry house, before the spent air to be discharged is exhausted into the atmosphere. The temperature of the fresh air will be brought to a desired level thereby, whilst any dust and pathogenic germs contained in the air may be removed from the air to be supplied to the poultry house. The air to be discharged from the poultry house may be exhausted into the atmosphere at a desired location, where the amount of nuisance is kept to a minimum, whilst furthermore the air may be passed through a purification filter or the like before being exhausted into the atmosphere.

In this manner it will be possible to maintain conditions which are optimal for rearing poultry, and if the emission of substances constituting a burden to the environment is in fact not prevented altogheter, it is certainly reduced to an optimal minimum.

When the poultry is to be transported the cross walls 8 separating the cages 10 from each other may be pivoted upwards and the belt 5 will be wound on the drum 13. As a result of said winding the poultry as well as the layer of litter will be transported in the direction of the conveyor belt 5 set to the desired height, by means of which the poultry can be conveyed to a collecting room 25, in which the poultry may be packed, for example in crates. At the same time the manure and the litter may be carried away by means of a conveyor belt 26. Any manure or the like which has fallen through the perforated bottom of the cages may be removed by winding up the belt 12 forming the bottom of the air duct.

After the cages have been emptied the belts 5 and 12 may be pulled back again and all cages may be cleaned before the cages are filled with new poultry again.

In stead of pivotable cross walls 8 there could be used also cross walls which can be displaced in an other way e.g. cross walls which can dismountable.

## Claims

1. A device for keeping poultry, provided with a building (21) and with cages disposed one above the other inside the building (21), whereby the cages are provided with belts (5) which are movable in the longitudinal direction of the cages, whilst air ducts are located under said belts, via which pressurized air from an air conditioning plant can be supplied to the cages, and means are provided by which the air flowing from the cages can be discharged from the building (21), all this in such a manner that a certain overpressure can be maintained inside the building (21), characterized in that the belts (5) for taking up litter form suitable cage floors, whereby the belts (5) are evenly perforated over at least substantially their entire effective surface forming the floors, whilst the bottoms of the air ducts (6) located below the belts (5) are made up of closed belts (12), which are movable in the longitudinal direction of the cages.

2. A device according claim 1, characterized in that several separated cages (10) are disposed one behind the other, said cages (10) being separated from each other by cross walls (8), which can be displaced in such a manner, that an open communication may be provided between the successive cages (10).

3. A device according to claim 1 or 2, characterized in that the belts (5) forming the floors of the cages (10) are supported by grids (4).

4. A device according to any one of the preceding claims, characterized in that the belts (5) forming the floors of the cages (10) are belts, in which holes are provided in regularly spaced-apart relationship.

5. A device according to any one of the preceding claims, characterized in that said belts (5, 12) can be wound on rollers (13, 14) disposed near one end of said cages (10).

6. A device according to any one of the preceding claims, characterized in that a vertically movable discharge conveyor (15) is disposed near one end of said cages (10).

7. A device according to any one of the preceding claims, characterized in that air to be exhausted from the building (21) is passed through a heat exchanger (24), in order to heat fresh air to be supplied to the building (21), before the air to be discharged is released into the atmosphere.

## Patentansprüche

1. Vorrichtung zur Geflügelhaltung, die mit einem Gebäude (21) und mit Käfigen versehen ist, die einer über dem anderen innerhalb des Gebäudes (21) angeordnet sind, wobei die Käfige Bänder (5) aufweisen, die in Längsrichtung der Käfige bewegbar sind, während Luftkanäle unterhalb der Bänder angeordnet sind, über die Druckluft von einer Luftkonditionierungsanlage den Käfigen zugeführt werden kann, und wobei Einrichtungen vorgesehen sind, über die die von den Käfigen zuströmende Luft aus dem Gebäude (21) abgeführt werden kann, all dies in einer Weise, daß ein gewisser Überdruck innerhalb des Gebäudes (21) aufrechterhalten werden kann, dadurch gekennzeichnet, daß die zur Mistaufnahme dienenden Bänder (5) geeignete Käfigböden bilden, wobei die Bänder (5) über mindestens im wesentlichen ihre gesamte wirksame Fläche, die die Böden bildet, gleichmäßig perforiert sind, während die Böden der unterhalb der Bänder (5) angeordneten Luftkanäle (6) aus geschlossenen Bändern (12) bestehen, die in Längsrichtung der Käfige bewegbar sind.

2. Vorrichtung nach Anspruch 1, dadurch gekennzeichnet, daß diverse getrennte Käfige (10) einer hinter dem anderen angeordnet sind und daß die Käfige (10) über Querwände (8) voneinander getrennt sind, die so verschoben werden können, daß eine offene Verbindung zwischen den aufeinander folgenden Käfigen (10) hergestellt werden kann.

3. Vorrichtung nach Anspruch 1 oder 2, dadurch gekennzeichnet, daß die die Böden der Käfige (10) bildenden Bänder (5) über Roste (4) gelagert sind.

4. Vorrichtung nach einem der vorangehenden Ansprüche, dadurch gekennzeichnet, daß die die Böden der Käfige (10) bildenden Bänder (5) Bänder sind, in denen Löcher in regelmäßigen Abständen angeordnet sind.

5. Vorrichtung nach einem der vorangehenden Ansprüche, dadurch gekennzeichnet, daß die Bänder (5, 12) auf Rollen (13, 14) gewickelt werden können, die in der Nähe eines Endes der Käfige (10) angeordnet sind.

6. Vorrichtung nach einem der vorangehenden Ansprüche, dadurch gekennzeichnet, daß ein vertikal beweglicher Abgabeförderer (15) in der Nähe eines Endes der Käfige (10) angeordnet ist.

7. Vorrichtung nach einem der vorangehenden Ansprüche, dadurch gekennzeichnet, daß vom Gebäude (21) abzuführende Luft durch einen Wärmetauscher (24) geleitet wird, um dem Gebäude (21) zuzuführende Frischluft zu erhitzen, bevor die abzuführende Luft in die Atmosphäre abgegeben wird.

## Revendications

1. Dispositif pour l'élevage des volailles, comprenant un bâtiment (21) et des cages disposées les unes au-dessus des autres à l'intérieur dudit bâtiment (21), dans lequel les cages sont équipées de courroies (5) qu'on peut faire défiler dans la direction longitudinale des cages, cependant qu'il est prévu des conduits d'air placés sous lesdites courroies et à travers lesquels de l'air sous pression provenant d'une installation de conditionnement d'air peut être fourni aux cages, et il est prévu des moyens par lesquels l'air s'écoulant des cages peut être rejeté à l'extérieur du bâtiment (21), tout ceci de manière qu'une certaine surpression puisse être entretenue à l'intérieur du bâtiment (21), caractérisé en ce que les courroies (5) servant à évacuer le fumier forment des planchers de cages appropriés, les courroies (5) étant uniformément perforées sur au moins sensiblement toute leur surface effective qui forme les planchers, tandis que les fonds des conduits d'air (6) situés sous les courroies (5) sont formés de courroies pleines (12) qu'on peut faire défiler dans la direction longitudinale des cages.

2. Dispositif selon la revendication 1, caractérisé en ce que plusieurs cages séparées (10) sont disposées l'une derrière l'autre, lesdites cages (10) étant séparées les unes des autres par des cloisons transversales (8) qui peuvent être déplacées de manière à permettre d'établir une communication libre entre les cages (10) successives.

3. Dispositif selon la revendication 1 ou 2, caractérisé en ce que les courroies (5) qui forment les planchers des cages (10) sont supportées par des grilles (4).

4. Dispositif selon une quelconque des revendications précédentes, caractérisé en ce que les courroies (5) qui forment les planchers des cages (10) sont des courroies dans lesquelles des trous sont ménagés dans des positions relatives régulièrement espacées.

5. Dispositif selon une quelconque des revendications précédentes, caractérisé en ce que lesdites courroies (5, 12) peuvent s'enrouler sur des rouleaux (13, 14) disposés à proximité d'une extrémité desdites cages (10).

6. Dispositif selon une quelconque des revendications précédentes, caractérisé en ce qu'un transporteur de déchargement (15) mobile dans la direction verticale est disposé à proximité d'une extrémité desdites cages (10).

7. Dispositif selon une quelconque des revendications précédentes, caractérisé en ce que l'air qu'il s'agit d'extraire du bâtiment (21) passe à travers un échangeur de chaleur (20) de manière à chauffer l'air neuf qui est fourni au bâtiment (21) avant que l'air à évacuer ne soit rejeté dans l'atmosphère.
